(19)

Europäisches
Patentamt

European
Patent Office

Office européen
des brevets

(11) **EP 4 579 897 A1**

(12) **EUROPEAN PATENT APPLICATION**

(43) Date of publication:
 **02.07.2025 Bulletin 2025/27**

(21) Application number: **24218944.7**

(22) Date of filing: **11.12.2024**

(51) International Patent Classification (IPC):
 *H01M 50/143* (2021.01)  *H01M 50/166* (2021.01)
 *H01M 50/342* (2021.01)  *H01M 50/148* (2021.01)
 *H01M 50/152* (2021.01)  *H01M 50/528* (2021.01)
 *H01M 50/548* (2021.01)  *H01M 50/536* (2021.01)

(52) Cooperative Patent Classification (CPC):
 **H01M 50/143; H01M 50/148; H01M 50/166;**
 **H01M 50/3425; H01M 50/528; H01M 50/536;**
 **H01M 50/548;** H01M 50/152; H01M 50/559;
 H01M 2200/00

(84) Designated Contracting States:
 **AL AT BE BG CH CY CZ DE DK EE ES FI FR GB**
 **GR HR HU IE IS IT LI LT LU LV MC ME MK MT NL**
 **NO PL PT RO RS SE SI SK SM TR**
 Designated Extension States:
 **BA**
 Designated Validation States:
 **GE KH MA MD TN**

(30) Priority: **29.12.2023 PCT/CN2023/143524**

(71) Applicants:
 • **HUIZHOU EVE POWER CO., LTD**
  **Huizhou, Guangdong 516039 (CN)**
 • **Eve Power Co., Ltd.**
  **Jingmen, Hubei 448000 (CN)**

(72) Inventors:
 • **HUANG, Liming**
  **Huizhou, Guangdong, 516039 (CN)**
 • **MIN, Changfei**
  **Huizhou, Guangdong, 516039 (CN)**
 • **LIU, Rongwei**
  **Huizhou, Guangdong, 516039 (CN)**
 • **XU, Yuebin**
  **Huizhou, Guangdong, 516039 (CN)**
 • **HE, Wei**
  **Huizhou, Guangdong, 516039 (CN)**
 • **LIU, Jincheng**
  **Huizhou, Guangdong, 516039 (CN)**

(74) Representative: **Berggren Oy**
 **P.O. Box 16**
 **Eteläinen Rautatiekatu 10A**
 **00101 Helsinki (FI)**

(54) **EXPLOSION-PROOF STRUCTURE AND BATTERY**

(57)  An explosion-proof structure and a battery are provided. The explosion-proof structure includes a cover plate, and an explosion-proof groove is provided on the cover plate. The explosion-proof groove includes a first sub-groove and a second sub-groove, a projection of the first sub-groove and a projection of the second sub-groove on a side of the cover plate encloses a closed ring, and a thickness of the cover plate at the position where the first sub-groove is located is less than a thickness of the cover plate at the position where the second sub-groove is located. The present application improves the reliability of the cover plate and ensures the explosion-proof effect.

**EP 4 579 897 A1**

**Description**

TECHNICAL FIELD

This application belongs to the technical field of batteries, and more particularly relates to an explosion-proof structure and a battery.

BACKGROUND

In use of a power battery, an internal pressure of the battery is possible to rise beyond a safe value due to a short circuit or other reasons, thereby causing potential hazards such as explosion. In order to reduce the potential hazards, an explosion-proof diaphragm is generally provided on a cover plate of the battery, and the explosion-proof diaphragm gradually deforms with the increase of the internal pressure until bursting for the explosion-proof.

With thermal runaway of the battery, a temperature of the battery rises to a certain stage, and an internal electrolyte disintegrates a combustible gas such as methane. As the temperature of the battery continues to rise, the internal electrolyte disintegrates a comburent gas such as oxygen. As the internal pressure of the battery further increases, the explosion-proof diaphragm bursts. At this moment, the combustible gas, the comburent gas, and the substance in the battery interact to increase level of the thermal runaway and easily cause explosion of the battery.

SUMMARY

According to a first aspect, embodiments of the present application provide an explosion-proof structure applied to a battery. The explosion-proof structure includes a cover plate, the cover plate is provided with an explosion-proof groove, and the explosion-proof groove includes a first sub-groove and a second sub-groove. The first sub-groove and the second sub-groove are projected on a side of the cover plate to enclose a closed ring, and a thickness of the cover plate at a position where the first sub-groove is located is less than a thickness of the cover plate at a position where the second sub-groove is located.

According to a second aspect, embodiments of the present invention further provide a battery including: the explosion-proof structure as above; a core including a positive electrode and a negative electrode; and a housing, where the core is mounted in the housing, an end of the housing is provided with an opening, and the cover plate is sealingly connected to the housing to close the opening.

BRIEF DESCRIPTION OF THE DRAWINGS

FIG. 1 is a top view of a first alternative of explosion-proof structure according to some embodiments of the present application.
FIG. 2 is a cross-sectional view taken along line A-A in FIG. 1.
FIG. 3 is a partially enlarged view at B in FIG. 1.
FIG. 4 is a cross-sectional view taken along line C-C in FIG. 3.
FIG. 5 is a partially enlarged view at D in FIG. 4.
FIG. 6 is a sectional view taken along line E-E in FIG. 3.
FIG. 7 is a schematic diagram with dimension line of an explosion-proof structure according to some embodiments of the present application.
FIG. 8 is a perspective view of an explosion-proof structure according to some embodiments of the present application.
FIG. 9 is a top view of a second alternative of an explosion-proof structure according to some embodiments of the present application.
FIG. 10 is a top view of a third alternative of an explosion-proof structure according to some embodiments of the present application.
FIG. 11 is a top view of a fourth alternative of an explosion-proof structure according to some embodiments of the present application.
FIG. 12 is a top view of a fifth alternative of an explosion-proof structure according to an embodiment of the present application.
FIG. 13 is a top view of a sixth alternative of an explosion-proof structure according to some embodiments of the present application.
FIG. 14 is a perspective view of a battery according to some embodiments of the present application.

FIG. 15 is a top view of a battery according to some embodiments of the present application.
FIG. 16 is a cross-sectional view taken along line G-G in FIG. 15.
FIG. 17 is a partially enlarged view at H in FIG. 16.
FIG. 18 is a partially enlarged view at M in FIG. 16.

Reference Numerals:

110. cover plate; 111. first side; 112. second side; 113. first sub-portion; 114. second sub-portion; 1141. recess; 1142, boss; 115. third sub-portion; 116. fourth sub-portion; 120. explosion-proof groove; 121. first sub-groove; 122. second sub-groove; 140. core; 150. housing; 151. opening; 152. positive terminal; 153. flange; 154. pressing plate; 155. seal; 160. first current collector; 170. second current collector; 180. insulator.

DETAILED DESCRIPTION OF THE EMBODIMENTS

Embodiment of the present application provide an explosion-proof structure and a battery to solve a problem in the related art that the combustible gas, the comburent gas, and the substance in the battery interact to increase the level of the thermal runaway and cause explosion of the battery, as the explosion-proof structure bursts. The following description is made in conjunction with the accompanying drawings.

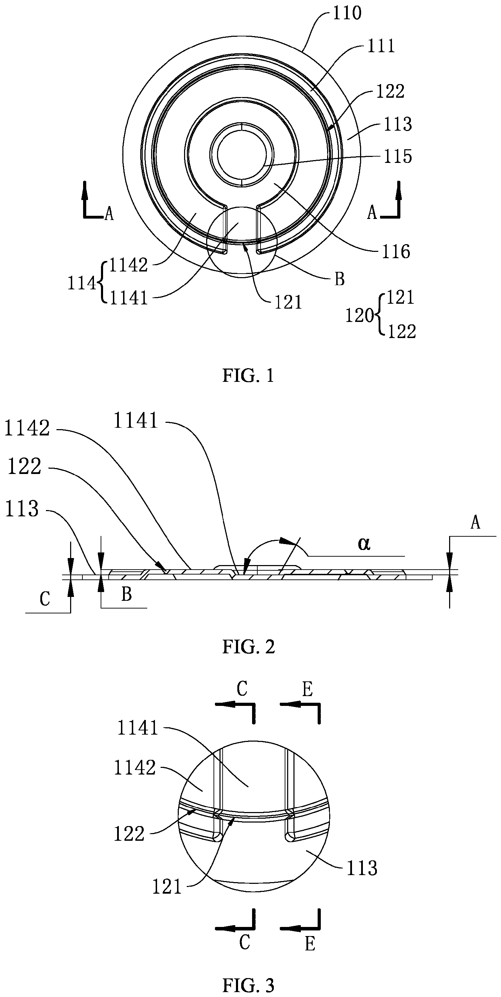

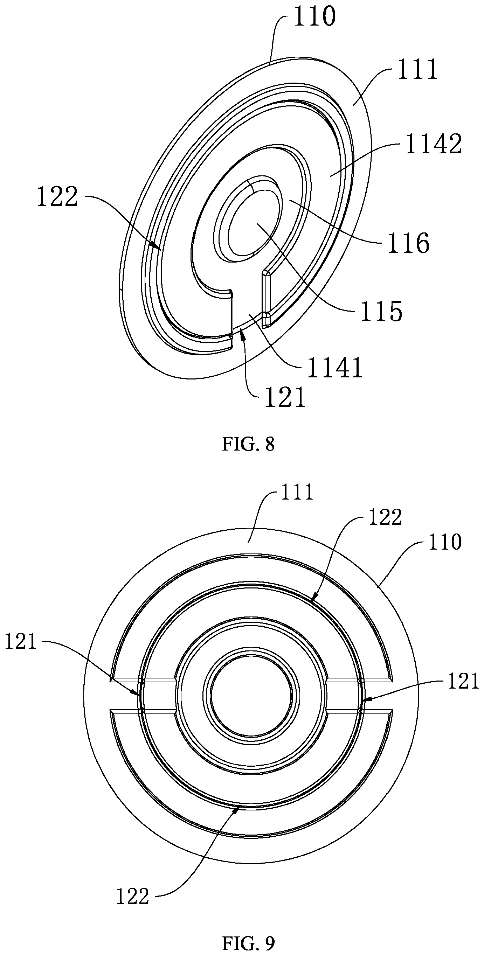

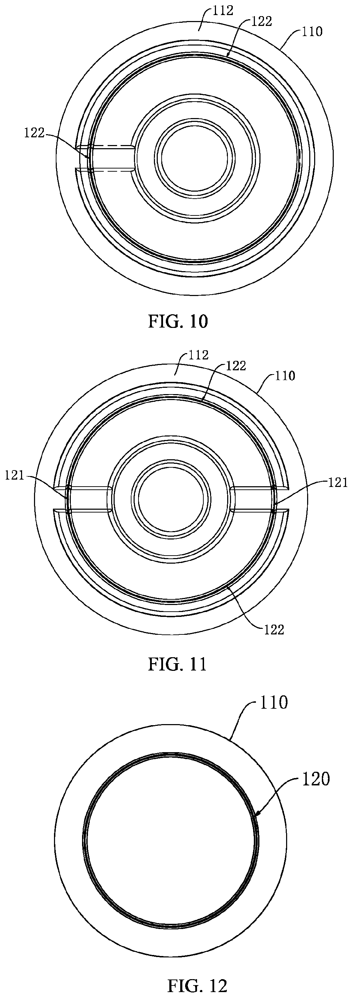

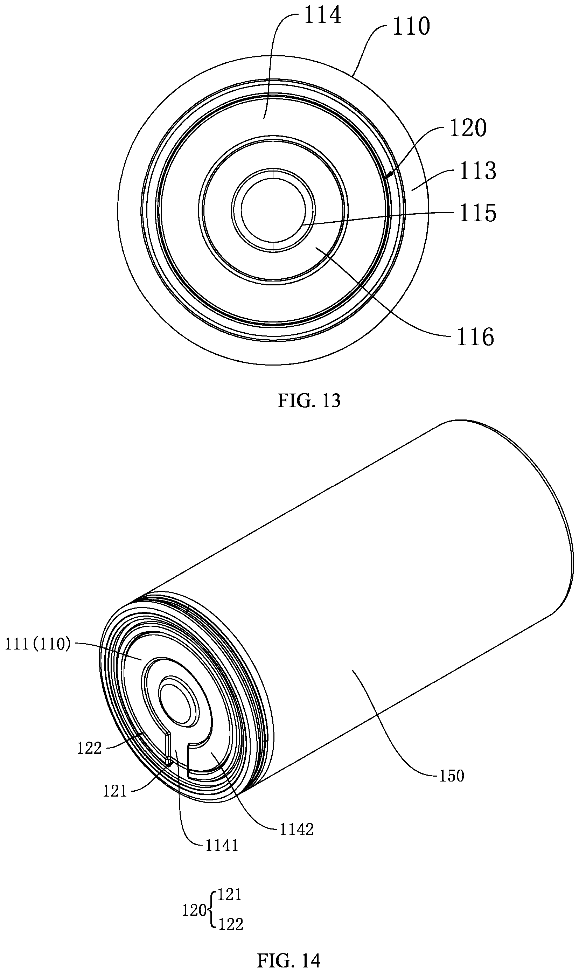

References are made to FIG. 1, and FIG. 9 to FIG. 13. FIG. 1 is a top view of a first alternative of explosion-proof structure according to some embodiments of the present application, FIG. 9 is a top view of a second alternative of an explosion-proof structure according to some embodiments of the present application, FIG. 10 is a top view of a third alternative of an explosion-proof structure according to some embodiments of the present application, FIG. 11 is a top view of a fourth alternative of an explosion-proof structure according to some embodiments of the present application, FIG. 12 is a top view of a fifth alternative of an explosion-proof structure according to an embodiment of the present application, and FIG. 13 is a top view of a sixth alternative of an explosion-proof structure according to some embodiments of the present application.

An explosion-proof structure is applied to a battery, such as a cylindrical battery, the explosion-proof structure includes a cover plate 110, and the cover plate 110 is in a disc-shaped structure. The cover plate 110 may be made of a steel material, such as a SPCC material, stainless steel-like materials SUS410, SUS306, SUS316, SUS430, SUS444, and the like. In a housing that the SPCC material is used, nickel may be plated on both sides of the cover plate 110, the thickness of the plated nickel layer ranges from $0.3\mu$m to $8\ \mu$m. The thickness of the plated nickel layer on both sides may be the same or different. The cover plate 110 is provided with an explosion-proof groove 120, and the explosion-proof groove 120 includes a first sub-groove 121 and a second sub-groove 122. The first sub-groove 121 and the second sub-groove 122 are both arc-shaped, and are located at different positions of the cover plate 110. The projection of the first sub-groove 121 and the second sub-groove 122 on a side of the cover plate 110 encloses a closed ring. The thickness of the cover plate 110 at the position where the first sub-groove 121 is located is less than the thickness of the cover plate 110 at the position where the second sub-groove 122 is located.

It should be understood that, since the thickness of the cover plate 110 at the position where the first sub-groove 121 is located is less than the thickness of the cover plate 110 at the position where the second sub-groove 122 is located, with increase of the internal pressure of the battery, the position of the first sub-groove 121 on the cover plate 110 is first relieved to discharge the combustible matters, and then the position of the second sub-groove 122 on the cover plate 110 is further relieved to discharge the comburent matters. The position of the cover plate 110 where the first sub-groove 121 is located is relieved under the first pressure, the position of the cover plate 110 where the second sub-groove 122 is located is relieved under the second pressure, and the first pressure is less than the second pressure, so that secondary pressure relief of the battery is defined. The first relief is capable of discharging the combustible gas, and the second relief is capable of discharging the comburent gas, thereby achieving the purpose of discharging the combustible gas and the comburent gas in a time division manner. As such, the problem in the related art that the combustible gas, the comburent gas, and the substance in the battery interact to increase the level of the thermal runaway and cause explosion of the battery, as the explosion-proof structure bursts. As the first sub-groove 121 and the second sub-groove 122 are projected on a side of the cover plate 110 to form a closed ring to ensure the pressure relief area, while the position of the cover plate 110 where the first sub-groove 121 is located is relieved, and the position of the cover plate 110 where the second sub-groove 122 located is pierced from the junction of the first sub-groove 121 and the second sub-groove 122 to facilitate the relief of the position of the cover plate 110 where the second sub-groove 122 is located. As such, the explosion-proof structure can be smoothly functioned, and that the part of the cover plate 110 at inner sides of the first sub-groove 121 and second sub-groove 122, and the part of the cover plate 110 at outer sides the first sub-groove 121 and the second sub-groove 122 completely fall off, thereby achieving the complete relief of the explosion-proof structure and ensuring the explosion-proof effect.

In some embodiments, the cross-sectional shape of the explosion-proof groove 120 is V-shaped, trapezoidal, semicircular, U-shaped, or parabolic in the thickness direction of the cover plate 110.

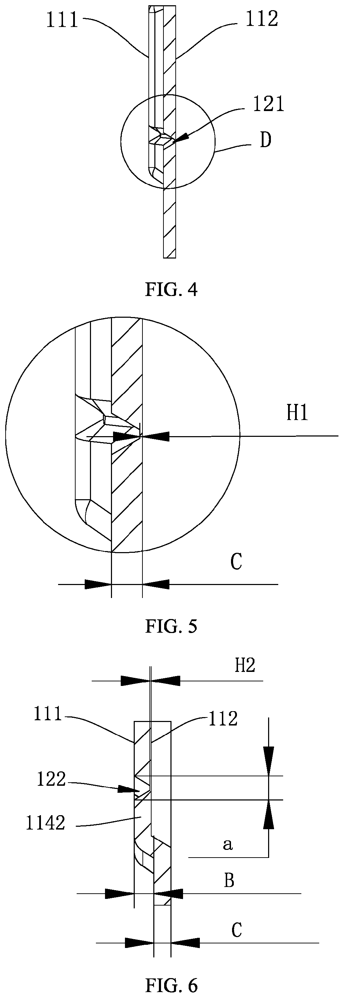

In some embodiments, referring to FIG. 4 and FIG. 12, the cover plate 110 includes a first side 111 and a second side 112 oppositely disposed. The first sub-groove 121 and the second sub-groove 122 are disposed on the first side 111, and are arc-shaped rings. The first sub-groove 121 is end-to-end connected to the second sub-groove 122, and is in communication with the second sub-groove 122.

It should be understood that the first sub-groove 121 and the second sub-groove 122 are provided on the first side 111 of the cover plate 110 to facilitate processing of the first sub-groove 121 and the second sub-groove 122.

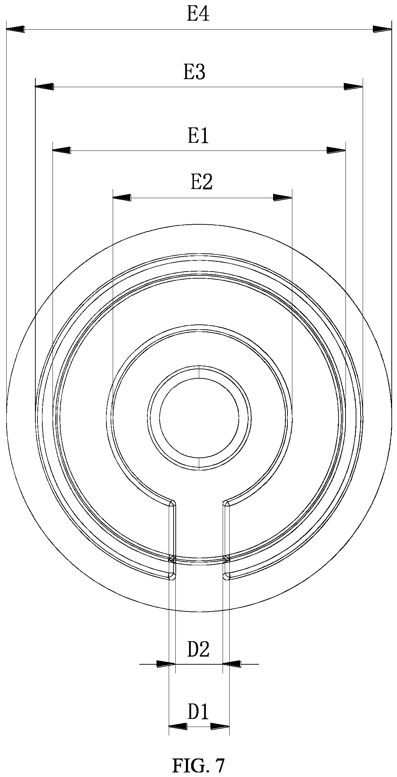

In some embodiments, as shown in FIG. 7, the outer diameter of the explosion-proof groove 120 is located is E1, and E1 satisfies: 24mm≤E1≤40mm, such as 30mm≤E1≤5mm, from the top view of the cover plate 110. The value of E1 may be 24mm, 25 mm, 26mm, 27mm, 28mm, 29mm, 30 mm, 31mm, 32mm, 33mm, 34mm, 35 mm, 36mm, 37mm, 38mm, 39mm, 40 mm, or other values not specified. The position of the explosion-proof groove 120 on the cover plate 110 is reasonably set to define a sufficiently large pressure relief area to ensure a pressure relief effect.

In some embodiments, referring to FIG. 5 and FIG. 6, the cover plate 110 at the first sub-groove 121 has a thickness H1 and the cover plate 110 at the second sub-groove 122 has a thickness H2, where H1 and H2 satisfy: 20 $\mu$m≤H1≤115 $\mu$m, 25 $\mu$m≤H2≤135 $\mu$m. For example, 45 $\mu$m≤H1≤55 $\mu$m 80 $\mu$m≤H≤2≤100 $\mu$m. The value of H1 may be 20$\mu$m, 30$\mu$m, 40$\mu$m, 50$\mu$m, 60$\mu$m, 70 $\mu$m, 80$\mu$m, 90 $\mu$m, 100$\mu$m, 100$\mu$m and 115$\mu$m. The value of H2 may be 25 $\mu$m, 35 $\mu$m, 45 $\mu$m, 55 $\mu$m, 65 $\mu$m, 75 $\mu$m, 85 $\mu$m, 95 $\mu$m, 105 $\mu$m, 115 $\mu$m, 125 $\mu$m, 135 $\mu$m, or other values not specified.

It should be understood that the thicker the thickness of the cover plate 110 at the position where the explosion-proof groove 120 is located, the greater the pressure required to relieve the explosion-proof groove 120, and the thickness of the cover plate 110 at the position where the explosion-proof groove 120 is located is positively related to the pressure required to relief the explosion-proof groove 120. If the thickness of the cover plate 110 at the position where the explosion-proof groove 120 is located is relatively thin, the explosion-proof groove 120 may be relieved within the normal operating range of the battery, and may affect the performance of the battery. If the thickness of the cover plate 110 at the position where the explosion-proof groove 120 is located is relatively thick, the pressure required to relieve the explosion-proof groove 120 is relatively large, and the battery is susceptible to explosion. In embodiments of the present application, the thickness of the cover plate 110 in which the explosion-proof groove 120 is located is designed in a reasonable range, so that the secondary pressure relief is realized while the normal operation of the battery is satisfied, and the explosion of the battery is prevented.

In some embodiments, H2 and H1 satisfy: 5 $\mu$m≤H2-H1≤20 $\mu$m; where, the value of H2-H1 may be 5 $\mu$m, 10$\mu$m, 15$\mu$m, 20$\mu$m, or other values not specified. The difference between H2 and H1 is set to be within a reasonable range to ensure the reliability of primary pressure relief and secondary pressure relief.

In some embodiments, as shown in FIG. 5, the thickness of the area outside the explosion-proof groove 120 on the cover plate 110 is C, and C satisfies with 0.4mm≤C≤1.0mm; where, the value of C may be 0.4 mm, 0.5 mm, 0.6 mm, 0.7mm, 0.8 mm, 0.9mm, 1.0 mm, or other values not specified. The thickness of the cover plate 110 is reasonably set so that the first sub-groove 121 and the second sub-groove 122 can be machined while the strength of the cover plate 110 is ensured, thereby realizing secondary pressure relief.

In some embodiments, the arc length of the first sub-groove 121 is less than the arc length of the second sub-groove 122, where the arc length of the first sub-groove 121 refers to the length of the arc where the outer edge of the explosion-proof groove 120 at the first sub-groove 121 is located, and the arc length of the second sub-groove 122 refers to the length of the arc where the outer edge of the explosion-proof groove 120 at the second sub-groove 122 is located.

In some embodiments, the ratio of the arc length of the first sub-groove 121 to the arc length of the second sub-groove 122 is G, and G satisfies with 1/20≤G≤1/7. The value of G may be 1/20, 1/19, 1/18, 1/17, 1/16, 1/15, 1/14, 1/13, 1/12, 1/11, 1/10, 1/9, 1/8, 1/7, or other values not specified. The arc length of the first sub-groove 121 and the arc length of the second sub-groove 122 are reasonably arranged, and the opening size for the primary pressure relief and the opening size for the secondary pressure relief are reasonably arranged to ensure the explosion-proof effect.

In some embodiments, referring to FIG. 6, the notch of the explosion-proof groove 120 has a width of a, and a satisfies with 0.6mm≤a≤1.5mm. The value of a may be 0.6 mm, 0.7mm, 0.8 mm, 0.9mm, 1.0 mm, 1.1mm, 1.2 mm, 1.3mm, 1.4mm, 1.5 mm, or other values not specified. The width of the notch of the explosion-proof groove 120 is appropriately set, and the width of the notch of the first sub-groove 121 and the width of the notch of the second sub-groove 122 are the same. As such, the width of the notch of the explosion-proof groove 120 is prevented from being excessively small and from being unfavorable for machining and opening; and the width of the notch of the explosion-proof groove 120 is also prevented from being excessively large, from the area of the explosion-proof groove 120 being increased excessively, and from affecting the structural strength of the cover plate 110.

In some embodiments, referring to FIG. 9, FIG. 11, and FIG. 13, the explosion-proof groove 120 includes a plurality of first sub-grooves 121 and a plurality of second sub-grooves 122 alternately disposed. The plurality of first sub-grooves 121 and the plurality of second sub-grooves 122 are located on the same circle, and the projection of the plurality of first sub-grooves 121 and the plurality of second sub-grooves 122 on a side of the cover plate 110 encloses a closed ring.

It should be understood that in order to achieve secondary pressure relief, the position of the cover plate 110 at all first sub-grooves 121 is relieved under the first pressure, and the position of the cover plate 110 at all second sub-grooves 122 is relieved under the second pressure. The first pressure is less than the second pressure. By providing the cover plate 110 with the plurality of first sub-grooves 121 and the plurality of second sub-grooves 122, the position of the cover plate 110 at the explosion-proof groove 120 can be fully relieved, thereby ensuring the pressure relief area and the pressure relief effect.

In some embodiments, the cover plate 110 includes a first sub-portion 113 the second sub-portion 114 adjacent to each other. The first sub-portion 113 is adjacent to the edge of the cover plate 110. The surface of the second sub-portion 114 toward the core 140 is at least partially higher than the surface of the first sub-portion 113 toward the core 140. The surface of the second sub-portion 114 away from the core 140 is at least partially higher than the surface of the first sub-portion 113 away from the core 140, and the explosion-proof recess 120 is disposed on the second sub-portion 114.

It should be understood that the cover plate 110 is designed in a concave-convex configuration. In a housing that the cover plate 110 is deformed, the cover plate 110 is in a hemispherical or cap shape, thereby increasing the space between the cover plate 110 and the end portion of the core, and preventing the pressure inside the battery from increasing rapidly to cause the explosion of the battery.

On the basis of the above-described embodiments, referring to FIG. 2, FIG. 8 and FIG. 13, the cover plate 110 includes a third sub-portion 115. The first sub-portion 113, the second sub-portion 114 and the third sub-portion 115 are concentric in the radial direction of the cover plate 110. The first sub-portion 113 and the second sub-portion 114 are annular, and the third sub-portion 115 is circular. The first sub-portion 113 is close to the edge of the cover plate 110. In the direction from the second side 112 to the first side 111, the surface of the second sub-portion 114 toward the core 140 is at least partially higher than the surface of the first sub-portion 113 toward the core 140, the surface of the second sub-portion 114 away from the core 140 is at least partially higher than the surface of the first sub-portion 113 away from the core 140. The explosion-proof groove 120 is provided on the second sub-portion 114, and the first sub-groove 121 and the second sub-groove 122 are concentric with the second sub-portion 114.

It should be understood that, when the pressure in the battery is increased, the cover plate 110 is deformed to raise to the side at the first side 111. The height of the second sub-portion 114 and the third sub-portion 115 is designed to be higher than the height of the first sub-portion 113, and the cover plate 110 is deformed to have a hemispherical shape or a cap shape to increase the space between the cover plate 110 and the end portion of the core 140, thereby preventing the pressure in the battery from increasing rapidly to cause the explosion of the battery.

In some embodiments, referring to FIG. 8 and FIG. 13, the cover plate 110 further includes a fourth sub-portion 116, and the fourth sub-portion 116 is annular. The fourth sub-portion 116 is located between the second sub-portion 114 and the third sub-portion 115, and connects the second sub-portion 114 and the third sub-portion 115.

It should be understood that by providing the explosion-proof groove 120 on the second sub-portion 114, the deformation force of the first sub-portion 113 and the fourth sub-portion 116 acts on the explosion-proof groove 120 during the deformation of the cover plate 110, thereby facilitating smooth relief of the explosion-proof groove 120 and reliability of the explosion-proof structure.

In other embodiments, the height of the third sub-portion 115 on the first side 111 is higher than the height of the second sub-portion 114, the height of the second sub-portion 114 is partially higher than the height of the first sub-portion 113, and the first sub-portion 113 is higher than the fourth sub-portion 116. On the second side 112, the fourth sub-portion 116 is lower than the first sub-portion 113, the first sub-portion 113 is at least partially lower than the second sub-portion 114, and the second sub-portion 114 is lower than the third sub-portion 115.

It should be understood that, when the cover plate 110 is installed on the battery for use, the fourth sub-portion 116 of the cover plate 110 is connected to the electrode of the battery, and the cover plate 110 is charged. For the battery, the potential between the cover plate 110 and the housing 150 of the battery is the same, and there is no potential difference, thereby reducing the risk of corrosion of the cover plate 110, and improving the reliability of the battery pack.

On the basis of the above-described embodiments, the surface of the first sub-portion 113 toward the core 140 is higher than the surface of the fourth sub-portion 116 toward the core 140, and the fourth sub-portion 116 is used for connection with the electrode of the battery. When the cover plate 110 is installed on the battery for use, the fourth sub-portion 116 of the cover plate 110 is connected to the electrode of the battery, and the cover plate 110 is charged. For the battery, the potential between the cover plate 110 and the housing 150 of the battery is the same, and there is no potential difference, thereby reducing the risk of corrosion of the cover plate 110, and improving the reliability of the battery pack. In addition, the surface of the first sub-portion 113 away from the core 140 is higher than the surface of the fourth sub-portion 116 away from the core 140.

On the basis of the above-described embodiments, the surface of the first sub-portion 113 toward the core 140, the surface of the fourth sub-portion 116 toward the core 140, and the surface of the recess 1141 toward the core 140 are at the same height. In addition, the surface of the first sub-portion 113 away from the core 140, the surface of the fourth sub-portion 116 away from the core 140, and the surface of the recess 1141 toward the core 140 are at the same height so as to facilitate processing and molding of the cover plate 110.

In some embodiments, as shown in FIG. 13 and FIG. 6, the distance between the first side 111 of the second sub-portion 114 and the first side 111 of the first sub-portion 113 is defined as B, and B satisfies with $0.8C \leq B \leq 1.5C$, where C is the thickness of an area other than the explosion-proof groove 120 on the cover plate 110, The value may be 0.8C, 0.9C, 1.0C, 1.1C, 1.2C, 1.3C, 1.4C, 1.5C, or other values not specified.

In some embodiments, the outer diameter of the explosion-proof groove 120 is E1, the inner diameter of the second sub-portion 114 is E2, the outer diameter of the second sub-portion 114 is E3, and the diameter of the cover plate 110 is E4. E4 satisfies with 42mm≤E4≤46mm, and the value of E4 may be 42mm, 43mm, 44mm, 45mm, 46mm, or other values not specified. E1, E2, E3 and E4 satisfy with 0.75E4≤E3≤0.96E4, 0.4E4≤E2≤0.72E4 and 3C≤E3-E2≤ 27.8C; E2+C≤E1≤E3-C, where C is the thickness of an area other than the explosion-proof groove 120 on the cover plate 110.

It should be understood that the diameter E4 of the cover plate 110 in the embodiments of the present application is related with the specification of the battery product correspondingly, the dimensions E2 and E3 are associated with E4, the dimension E1 is associated with E2 and E3, as such, the structural dimensions of the cover plate 110 are reasonably designed. The structure and parameters of the first sub-portion 113, the second sub-portion 114, the third sub-portion 115, and the fourth sub-portion 116 are reasonably set, so that the primary pressure relief and the secondary pressure relief of the cover plate 110 are realized while the strength of the cover plate 110 and the space of the deformed the cover plate 110 are ensured, thereby facilitating the processing of the explosion-proof groove 120.

In some embodiments, referring to FIG. 1, FIG. 3, and FIG. 8, the second sub-portion 114 includes a recess 1141 and a boss 1142, and the recess 1141 and boss 1142 enclose a closed ring. The surface of the boss 1142 toward the core 140 is higher than the surface of the recess 1141 toward the core 140, and the surface of the boss 1142 away from the core 140 is higher than the surface of the recess 1141 away from the core 140. In the direction from the second side 112 to the first side 111, the recess 1141 and the first sub-portion 113 are at the same height, that is, the first side 111 of the recess 1141 and the first side 111 of the first sub-portion 113 are at the same horizontal plane, and the second side 112 of the recess 1141 and the second side 112 of the first sub-portion 113 are at the same horizontal plane. The boss 1142 is disposed higher than the recess 1141, the first sub-groove 121 is disposed at least partially on the recess 1141, and the second sub-groove 122 is disposed on the boss 1142.

It should be understood that by forming the recess 1141 and the boss 1142 on the second sub-portion 114, the first sub-groove 121 is at least partially provided on the recess 1141, and the second sub-groove 122 is provided on the boss 1142. In a case that the pressure inside the battery is increased and the cover plate 110 is deformed, the first sub-groove 121 at the recess 1141 is subjected to the force of deformation of the cover plate 110 and the explosion-proof groove 120 is first relieved from the recess 1141 to realize the specified relief at the position of the first sub-groove 121, thereby ensuring that the secondary pressure relief is orderly performed. Here, the explosion-proof groove 120 is first relived from the recess 1141, and has a plurality of relief modes, for example, the first sub-groove 121 on the recess 1141 is instantaneously completely relieved, or the first sub-groove 121 is relieved from the relieving points therewith until completely opened. The relieving point may be at the junction of the boss 1142 and the recess 1141 on the first sub-groove 121, or may be any position on the first sub-groove 121 in the recess 1141.

On the basis of the above-described embodiments, the third sub-portion 115 is higher than the boss 1142 in the direction from the second side 112 to the first side 111, that is, the surface of the third sub-portion 115 away from the core 140 is higher than the surface of the boss 1142 away from the core 140, and the surface of the third sub-portion 115 toward the core 140 is higher than the surface of the boss 1142 toward the core 140. The space for the deformation of the cover plate 110 can be increased as much as possible.

In some embodiments, referring to FIG. 2, the depth of the recess 1141 is A, and A satisfies with 0.8≤A≤1.5C, such as 1C≤A≤1.3C, where C is the thickness of the cover plate 110. The value of A may be 0.8C, 0.9C, 1.0C, 1.1C, 1.2C, 1.3C, 1.4C, 1.5C, or other values not specified. The depth of the recess 1141 refers to the vertical distance between the first side 111 of the boss 1142 and the first side 111 of the recess 1141.

In some embodiments, referring to FIG. 7, the width of the top of the recess 1141 is D1 and the width of the bottom of the recess 1141 is D2, and D1 and D2 satisfy with: 4mm≤D1≤ 12mm; D2=D1-2C*tan ($\alpha$-90°), and D2>2mm; where $\alpha$ is an included angle between the bottom of the recess 1141 and the side of the recess 1141, 100 ° ≤$\alpha$≤170° ; and C is the thickness of the area other than the explosion-proof groove 120 on the cover plate 110.

The value of D1 may be 4 mm, 5 mm, 6 mm, 7 mm, 8 mm, 9 mm, 10 mm, 11mm, 12 mm or other values not specified, and the value of $\alpha$ may be 100°, 110°, 120°, 130°, 140°, 150°, 160°, 170° or other values not specified. The size of the recess 1141 is reasonably set to ensure the effect of the specified relief of the explosion-proof structure.

In some embodiments, referring to FIG. 10, the cover plate 110 includes a first side 111 and a second side 112 oppositely disposed, the first sub-groove 121 and the second sub-groove 122 are disposed on the second side 112, and the first sub-groove 121 communicates with the second sub-groove 122.

It should be understood that the provision of the explosion-proof groove 120 on the side of the cover plate 110 adjacent to the core facilitates the relief of the explosion-proof groove 120 and ensures the explosion-proof effect.

In some embodiments, the cover plate 110 includes a first side 111 and a second side 112 oppositely disposed, the first sub-groove 121 is disposed on the first side 112, and the second sub-groove 122 is disposed on the second side 112.

As a variant, the cover plate 110 includes a first side 111 and a second side 112 oppositely disposed, the second sub-groove 122 is disposed on the first side 112, and the first sub-groove 121 is disposed on the second side 112.

It should be understood that the first sub-groove 121 and the second sub-groove 122 may be provided on both sides of the cover plate 110 to facilitate processing.

In some embodiments, the cover plate 110 at the first sub-groove 121 is relieved under a first pressure, and the cover plate 110 at the second sub-groove 122 is relieved under a second pressure. The magnitude of the first pressure is P1 and the magnitude of the second pressure is P2, where P1 and P2 satisfy with: 0.5Mpa<P1<1.5Mpa, and 1.5Mpa≤P2<2.5Mpa.

Under normal operating conditions of the battery, the internal pressure of the battery may reach 0.5Mpa, and generally the internal pressure of the battery may increase with the temperature and the electrolytic solution decomposition for a period of time before the thermal runaway of the battery. In order for the combustible gas decomposed by the electrolytic solution to be discharged first without affecting the normal operation of the battery, the first pressure P1 is set to range from 0.5Mpa to 1.5Mpa, for example, the value of the first pressure P1 may be 0.6Mpa, 0.7Mpa, 0.8Mpa, 0.9Mpa, 1.0Mpa, 1.1Mpa, 1.2Mpa, 1.3Mpa, 1.4Mpa or other values not specified. The internal pressure of the battery at the end of the thermal runaway may be increased to a certain extent so that the explosion-proof valve is required to relieve and release the internal combustion substance of the battery to avoid occurrence of explosion of the battery, and the second pressure P2 is set to range from 1.5Mpa to 2.5Mpa, and the value of the second pressure P2 may be 1.6Mpa, 1.7Mpa, 1.8Mpa, 1.9Mpa, 2.0Mpa, 2.1Mpa, 2.2Mpa, 2.3Mpa, 2.4Mpa or other values not specified.

In some embodiments, the thickness H1 of the cover plate 110 at the first sub-groove 121 and the thickness H2 of the cover plate 110 at the second sub-groove 122 are calculated according to the following equations (1) and (2): H1= (P1*E1)/4Q (1); and H2=(P2*E1)/4Q (2); where Q is the tensile strength of the material prepared for the cover plate 110; E1 is the outer diameter of the explosion-proof groove 120; P1 is the relief pressure for the cover plate 110 at the first sub-groove 121; and P2 is the relief pressure for the cover plate 110 at the second sub-groove 122.

The thickness H1 of the cover plate 110 at the first sub-groove 121 and the thickness H2 of the cover plate 110 at the second sub-groove 122 are calculated by using the above equations (1) and (2), and the first sub-groove 121 and the second sub-groove 122 are designed according to different positions and material characteristics. As such, it is convenient for design and accurate for the calculation results, thereby ensuring the performance of the cover plate 110.

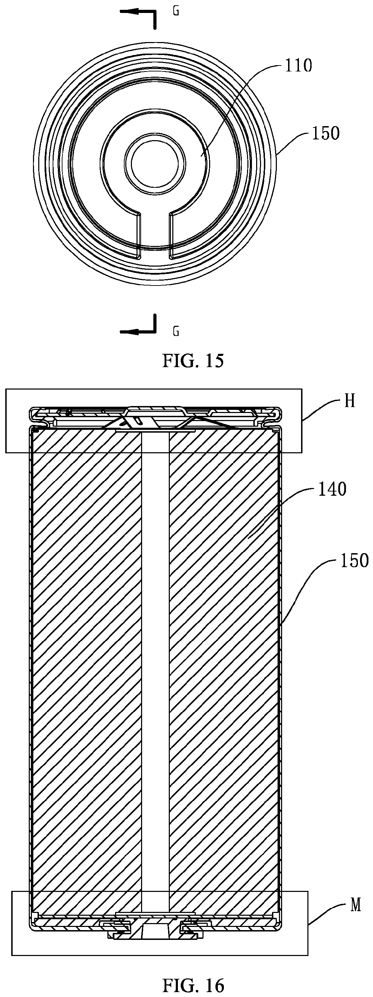

Referring to FIG. 14, FIG. 15, FIG. 16, FIG. 17, and FIG. 18, embodiments of the present application further provide a battery, which may be a cylindrical battery. The battery includes the explosion-proof structure described in any one of the above-described embodiments. The explosion-proof structure may be applied to the positive electrode side or the negative electrode side of the battery, and the present application is described by taking the explosion-proof structure to the negative electrode side of the battery as an example. The battery includes the above-described explosion-proof structure, a core 140, and a housing 150. The core 140 is mounted in the housing 150, an end of the housing 150 is provided with an opening 151, and a cover plate 110 is sealingly connected to the housing 150 to close the opening 151. The battery has the same technical effect as the battery explosion-proof structure which is not described again.

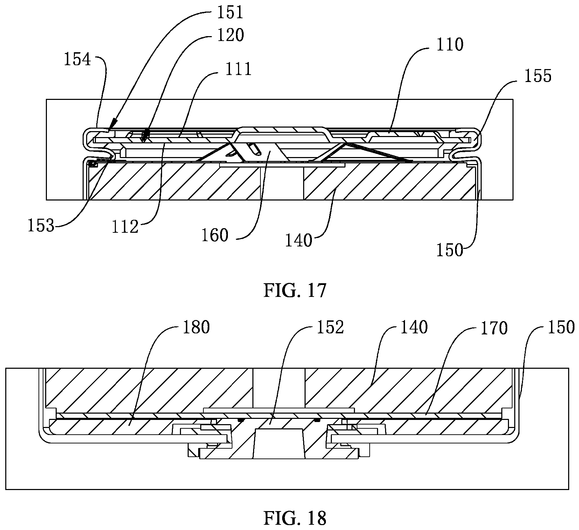

On the basis of the above-described embodiments, referring to FIG. 17 to FIG. 18, the battery further includes a first current collector 160, a second current collector 170, and an insulator 180. The other end of the housing 150 is provided with a positive terminal 152. The core 140, the first current collector 160, and the second current collector 170 are all disposed in the housing 150. The cover plate 110 is sealingly connected to the housing 150 and closes the opening 151, the second side 112 of the cover plate 110 is in abutment with a side of the first current collector 160, the other side of the first current collector 160 is welded to the negative electrode of the core 140, and the peripheral side of the first current collector 160 is connected to the inner surface of the housing 150. As such, the housing 150 is charged, and there is no potential difference between the cover plate 110 and the housing 150. Therefore, the risk of corrosion of the cover plate 110 is reduced, and the reliability of the battery is improved. An end of the housing 150 away from the cover plate 110 is provided with a positive terminal 152, the positive terminal 152 is sealingly connected to the housing 150 through an insulating seal ring, the second current collector 170 is welded to the positive terminal 152 and the positive electrode terminal of the core 140, and the second current collector 170 is located between the positive terminal 152 and the positive electrode terminal of the core 140. The insulator 180 is provided between the second current collector 170 and the end of the housing 150. The second current collector 170 and the housing 150 are insulated by the insulator 180.

In some embodiments, the area of the outer circle of the explosion-proof groove 120 on the cover plate 110 is φ1, φ1 is an area calculated from the outer diameter of the explosion-proof groove 120 on the cover plate 110, and the cross-sectional area of the housing 150 is φ2 in a direction perpendicular to the axis of the housing 150, wherein φ1 and φ2 satisfy with 0.27≤φ1/ φ2≤0.76.

It should be understood that the value of φ1/φ2 may be 0.27, 0.3, 0.4, 0.5, 0.6, 0.7, 7.6 or other values not specified. The ratio of φ1 to φ2 is reasonably set to ensure the pressure relief effect of the explosion-proof structure.

In some embodiments, the portion of the side wall of the housing 150 adjacent to the opening 151 is constricted to form a flange 153, the opening 151 of the housing 150 is provided with a pressing plate 154, and the pressing plate 154 and the flange 153 are opposite and spaced. The cover plate 110 is mounted between the flange 153 and the pressing plate 154, and a seal 155 is provided between the cover plate 110 and the flange 153, and between the cover plate 110 and the pressing plate 154 to ensure the sealability of the cover plate 110. The seal 155 is a seal ring, and the compression ratio of the seal ring ranges from 30% to 70%, to improve the pressure relief effect of the explosion-proof structure.

In other embodiments, the cover plate 110 is connected to the housing 150 by laser welding, which is simple and has a good sealing property. At this time, the first current collector 160 is in direct contact with the housing 150, and may also be in direct contact with the cover plate 110, so that the housing 150 is negatively charged.

The technical solutions and effects of the present application are described in detail by means of specific examples and comparative examples. The following examples are merely partial examples of the present application, and do not specifically limit the present application.

The embodiments are intended to examine the effect of the performance of the battery with application of an explosion-proof structure thereto.

First Test Group

The explosion-proof structure of the first test group is provided as follows. As shown in FIG. 12, the cover plate 110 includes a first side 111 and a second side 112 oppositely disposed, the first sub-groove 121 and the second sub-groove 122 are disposed on the first side 111, the first sub-groove 121 and the second sub-groove 122 are arc-shaped rings, the first sub-groove 121 is end-to-end connected to the second sub-groove 122, the first sub-groove 121 is in communication with the second sub-groove 122, and parameters of the cover plate 110 relate to H1, H2, H2-H1, a, C, G, and E1.

Test method: Article 6.2.4 of the GB/T31485-2015 standard is used.

The evaluation criterion is that the relief time of the first sub-groove 121 is T1, the relief time of the second sub-groove 122 is T2, and the relief time interval between the first sub-groove 121 and the second sub-groove 122 is $\Delta T$, where T1 and T2 satisfy with: $50s \leq T1 \leq 100s$, $60s \leq T2 \leq 150s$, $5s \leq \Delta T \leq 50s$.

Basic group 1 is provided, and parameters of basic group 1 and validation results are as shown in Table 1.1 below.

Table 1.1: Parameters and Validation Results of Basic Group 1

| | H1 /μm | H2 /μm | (H2-H1) /μm | a /mm | C /mm | G | E1 /mm |
|---|---|---|---|---|---|---|---|
| Basic Group 1 | 115.0 | 120.0 | 5.0 | 0.6 | 0.4 | 1/20 | 24.0 |
| Validation Results | T1=95s, T2=120s , $\Delta T$=25s | | | | | | |

As can be seen from the validation results in Table 1.1, the relief time of the first sub-groove 121 and the relief time of the second sub-groove 122 meet the evaluation criteria, and the secondary pressure relief is realized while the performance of the explosion-proof structure is satisfied.

On the basis of the parameters of the basic group 1, the parameter variation of the cover plate 110 is controlled by a single variable method to set the comparative examples and the embodiments, and the variation parameter tables and validation results of the comparative examples and the embodiments are shown in Tables 1.2 to 1.5.

Table 1.2: Validation Results for Embodiments and Comparative Examples with Basic Group 1 as Parameters and Variation of H1, H2

| | H1/ μm | H2/ μm | Validation Result |
|---|---|---|---|
| Embodiment 1 | 20.0 | 25.0 | T1=60s , T2=65s , $\Delta T$=5s |
| Embodiment 2 | 67.0 | 72.0 | T1=75s, T2=90s, $\Delta T$=15s |
| Comparative Example 1 | 15.0 | 20.0 | T1=55s , T2=59s, $\Delta T$=4s |
| Comparative Example 2 | 120.0 | 125.0 | T1=118s, T2=122s, $\Delta T$=4s |

According to Table 1.2, it can be seen that, in a case that H1 is within the set range, the performance of the explosion-proof structure is satisfied while realizing the secondary pressure relief, and in a case that H1 is not within the set range, the time interval of the primary and secondary pressure relief is shorter, so that the secondary pressure relief effect of the explosion-proof structure is reduced.

Table 1.3: Validation Results for Embodiment and Comparative Examples with Basic Group 1 as Parameters and H2-H1 Changing with Variation of H2

|  | H2/μm | H2-H1/μm | Validation Result |
|---|---|---|---|
| Embodiment 1 | 125.0 | 10.0 | T1=95s , T2=125s , ΔT=30s |
| Embodiment 2 | 135.0 | 20.0 | T1=95s, T2=143s, ΔT=48s |
| Comparative Example 1 | 117.0 | 2.0 | T1=95s, T2=98s, ΔT=3s |
| Comparative Example 2 | 140.0 | 25.0 | T1=95s, T2>150s, ΔT>45s |

According to Table 1.3, it can be seen that, in a case that H2 and H2-H1 are within the set range, and the performance of the explosion-proof structure is satisfied while realizing the secondary pressure relief. In a case that H2-H1 is lower than the set range, the time interval of the primary and secondary pressure relief is shorter; and in a case that H2-H1 is higher than the set range, the time interval of the primary and secondary pressure relief is longer, or the second sub-groove 122 has a longer time to relieve, as such, the effect of the secondary pressure relief of the explosion-proof structure is reduced.

Table 1.4: Validation Results for Embodiments and Comparative Examples with Basic Group 1 as Parameters and Variation of G

|  | G | Validation Result |
|---|---|---|
| Embodiment 1 | 1/10 | T1=95s, T2=127s, ΔT=32s |
| Embodiment 2 | 1/7 | T1=95s, T2=136s, ΔT=41s |
| Comparative Example 1 | 1/5 | T1=96s, T2=150s, ΔT=54s |
| Comparative Example 2 | 1/22 | T1=95s, T2=98s, ΔT=3s |

According to Table 1.4, it can be seen that, in a case that G is within the set range, and the performance of the explosion-proof structure is satisfied while realizing the secondary pressure relief; and in a case that G is lower or higher than the set range, the time interval of the primary and secondary pressure relief is shorter or longer, which reduces the secondary pressure relief effect of the explosion-proof structure.

Table 1.5: Validation Results for Embodiments and Comparative Examples with Basic Group 1 as Parameters and Variation of E1

|  | E1/mm | Validation Result |
|---|---|---|
| Embodiment 1 | 32.0 | T1=87s, T2=116s, ΔT=29s |
| Embodiment 2 | 40.0 | T1=78s, T2=110s, ΔT=32s |
| Comparative Example 1 | 20.0 | T1=100s, T2=156s, ΔT=56s |
| Comparative Example 2 | 45.0 | T1=50, T2=105, ΔT=55 |

According to Table 1.5, it can be seen that, in a case that E1 is within the set range, and the performance of the explosion-proof structure is satisfied while realizing the secondary pressure relief; and in a case that E1 is lower or higher than the set range, the time interval of the primary and secondary pressure relief is shorter, which reduces the secondary pressure relief effect of the explosion-proof structure.

Second Test Group

The explosion-proof structure of the first test group is provided as follows. As shown in FIG. 13, the cover plate 110 includes a first side 111 and a second side 112 oppositely disposed, the first sub-groove 121 and the second sub-groove 122 are disposed on the first side 111, the first sub-groove 121 and the second sub-groove 122 are arc-shaped rings, the first sub-groove 121 is end-to-end connected to the second sub-groove 122, the first sub-groove 121 is in communication with the second sub-groove 122. The cover plate 110 includes a first sub-portion 113 and a second sub-portion 114 adjacent to each other, and the first sub-portion is adjacent to the edge of the cover plate 110. In a direction from the second side 112 toward the first side 111, the second sub-portion 114 is at least partially higher than the first sub-portion 113, that is, the surface of the second sub-portion 114 toward the core 140 is at least partially higher than the surface of the first sub-portion 113 toward the core 140, the surface of the second sub-portion 114 away from the core 140 is at least partially higher than the surface of the first sub-portion 113 away from the core 140. The explosion-proof groove 120 is provided on the second sub-portion 114. The parameters of the cover plate 110 relate to H1, H2, H2-H1, a, C, G, B, E1, E2, E3, E4, E3-E2.

Test method: Article 6.2.4 of the GB/T31485-2015 standard is used.

The evaluation criterion is that the relief time of the first sub-groove 121 is T1, and the relief time of the second sub-groove 122 is T2, where T1 and T2 satisfy with: $50s \leq T1 \leq 100s$, $60s \leq T2 \leq 150s$, $5s \leq \Delta T \leq 50s$.

Basic group 2 is provided, and parameters of basic group 2 and validation results are as shown in Table 2.1 below.

Table 2.1: Parameters and Validation Results of Basic Group 2

| Parameter | Value | Parameter | Value | Validation Result |
|---|---|---|---|---|
| H1/$\mu$m | 115.00 | B/mm | 0.32 | T1=89s, T2=127s, $\Delta$T=38s |
| H2/$\mu$m | 120.00 | E1/mm | 26.00 | |
| (H2-H1)/$\mu$m | 5.00 | E2/mm | 25.00 | |
| a/mm | 0.60 | E3/mm | 31.5 | |
| C/mm | 0.40 | E4/mm | 42.00 | |
| G | 1/20 | (E3-E2)/mm | 6.50 | |

As can be seen from the validation results in Table 2.1, the relief time of the first sub-groove 121 and the relief time of the second sub-groove 122 meet the evaluation criteria, and the secondary pressure relief is realized while the performance of the explosion-proof structure is satisfied.

According to the comparison between the validation result of the basic group 1 and the validation result of the basic group 2, it can be seen that by providing the explosion-proof groove 120 on the second sub-portion 114, the time interval between the primary and secondary pressure relief is increased while the safety performance of the battery is ensured, thereby improving the effect of the secondary pressure relief of the explosion-proof structure.

On the basis of the parameters of the basic group 2, the parameter variation of the cover plate 110 is controlled by a single variable method to set the comparative examples and the embodiments, and the variation parameters and validation results of the comparative examples and the embodiments are shown in Tables 2.2 and 2.3.

Table 2.2: Validation Results for Embodiments and Comparative Examples with Basic Group 2 as Parameters and Variation of B

| | B/mm | Validation Result |
|---|---|---|
| Embodiment 1 | 0.48 | T1=86s, T2=129s, $\Delta$T=43s |
| Embodiment 2 | 0.60 | T1=84s, T2=123s, $\Delta$T=39s |
| Comparative Example 1 | 0.20 | T1=94s, T2=97s, $\Delta$T=3s |
| Comparative Example 2 | 1.00 | T1=78s, T2=81s, $\Delta$T=3s |

According to Table 2.2, it can be seen that, in a case that B is within the set range, and the performance of the explosion-proof structure is satisfied while realizing the secondary pressure relief; and in a case that B is lower or higher than the set range, the time interval of the primary and secondary pressure relief is shorter, which reduces the secondary pressure relief effect of the explosion-proof structure.

Table 2.3: Validation Results for Embodiments and Comparative Examples with Basic Group 2 as Parameters and Variation of E1, E2 and E3.

| | E1/mm | E2/mm | E3/mm | E3-E2/mm | Validation Result |
|---|---|---|---|---|---|
| Embodiment 1 | 33.00 | 30.00 | 40.32 | 10.32 | T1=92s , T2=124s , $\Delta$T=32s |
| Embodiment 2 | 34.00 | 24.00 | 35.00 | 11.00 | T1=85s , T2=127s , $\Delta$T=42s |
| Comparative Example 1 | 25.00 | 15.00 | 30.00 | 15.00 | T1=115s , T2=118s , $\Delta$T=3s |
| Comparative Example 2 | 38.00 | 33.00 | 41.00 | 11.00 | T1=78s, T2=82s, $\Delta$T=4s |

According to Table 2.3, it can be seen that, in a case that E1, E2, E3 and (E3-E2) are within the set range, and the performance of the explosion-proof structure is satisfied while realizing the secondary pressure relief; and in a case that E2 is not within the set range, the time interval of the primary and secondary pressure relief is shorter, which reduces the secondary pressure relief effect of the explosion-proof structure.

Third Test Group

The explosion-proof structure of the first test group is provided as follows. As shown in FIG. 1, the cover plate 110 includes a first side 111 and a second side 112 oppositely disposed, the first sub-groove 121 and the second sub-groove 122 are disposed on the first side 111, the first sub-groove 121 and the second sub-groove 122 are arc-shaped rings, the first sub-groove 121 is end-to-end connected to the second sub-groove 122, the first sub-groove 121 is in communication with the second sub-groove 122. The cover plate 110 includes a first sub-portion 113 and a second sub-portion 114 adjacent to each other, and the first sub-portion is adjacent to the edge of the cover plate 110. In a direction from the second side 112 toward the first side 111, the second sub-portion 114 is higher than the first sub-portion 113, and the explosion-proof groove 120 is provided on the second sub-portion 114. The second sub-portion 114 includes a recess 1141 and a boss 1142, the recess 1141 and the boss 1142 enclose a closed ring. In a direction from the second side 112 toward the first side 111, the surface of the recess 1141 toward the core 140 is at the same height as the surface of the first sub-portion 113 toward the core 140, the surface of the recess 1141 away from the core 140 is at the same height as the surface of the first sub-portion 113 away from the core 140. It is understood that the first side 111 of the recess 1141 and the first side 111 of the first sub-portion 113 are located in the same horizontal plane, the second side 112 of the recess 1141 and the second side 112 of the first sub-portion 113 are located in the same horizontal plane. The surface of the boss 1142 toward the core 140 is higher than the surface of the recess 1141 toward the core 140, and the surface of the boss 1142 away from the core 140 is higher than the surface of the recess 1141 away from the core 140. The first sub-groove 121 is disposed at least partially on the recess 1141, and the second sub-groove 122 is disposed on the boss 1142. The parameters of the cover plate 110 relate to H1, H2, H2-H1, a, C, G, A, E1, E2, E3, E4, E3-E2, D1/D2 and $\alpha$.

Test method: Article 6.2.4 of the GB/T31485-2015 standard is used.

The evaluation criterion is that the relief time of the first sub-groove 121 is T1, and the relief time of the second sub-groove 122 is T2, where T1 and T2 satisfy with: $50s \leq T1 \leq 100s$, $60s \leq T2 \leq 150s$, $15s \leq \Delta T \leq 50s$.

Basic group 3 is provided, and parameters of basic group 3 and validation results are as shown in Table 3.1 below.

Table 3.1: Parameters of Basic Group 3 and Validation Results

| Parameter | Value | Parameter | Value | Validation Result |
|---|---|---|---|---|
| H1/$\mu$m | 115.00 | E1/mm | 26.00 | T1=80s, T2=123s, $\Delta$T=43s |
| H2/$\mu$m | 120.00 | E2/mm | 25.00 | |
| (H2-H1)/$\mu$m | 5.00 | E3/mm | 31.50 | |
| a/mm | 0.60 | E4/mm | 42.00 | |
| C/mm | 0.40 | (E3-E2)/mm | 6.50 | |
| G | 1/20 | D1/mm | 5.00 | |
| A/mm | 0.32 | D2/mm | 4.20 | |
| | | $\alpha$ | 135° | |

As can be seen from the validation results in Table 3.1, the relief time of the first sub-groove 121 and the relief time of the second sub-groove 122 meet the evaluation criteria, and the secondary pressure relief is realized while the performance of the explosion-proof structure is satisfied.

According to the comparison among the validation results of the basic group 1, the basic group 2, and the basic group 3, it can be seen that by providing the recess 1141 and the boss 1142 on the second sub-portion, the primary and secondary pressure relief has a longer time interval, which facilitates the secondary pressure relief, and further improves the reliability of the explosion-proof structure.

On the basis of the parameters of the basic group 3, the parameter variation of the cover plate 110 is controlled by a single variable method to set the comparative examples and the embodiments, and the variation parameters and validation results of the comparative examples and the embodiments are shown in 3.2.

Table 3.2: Validation Results for Embodiments and Comparative Examples with Basic Group 3 as Parameters and Variation of D1 and D2

| | D 1 /mm | D2/mm | Validation Result |
|---|---|---|---|
| Embodiment 1 | 4.00 | 3.20 | T1=74s, T2=122s, ΔT=48s |
| Embodiment 2 | 12.00 | 11.20 | T1=97s, T2=126s, ΔT=29s |
| Comparative Example 1 | 1.00 | 0.20 | T1=60s, T2=124s, ΔT=64s |
| Comparative Example 2 | 18.00 | 17.20 | T1=100s, T2=104s, ΔT=4s |

According to Table 3.1, in a case that D1 is within the set range, and the performance of the explosion-proof structure is satisfied while realizing the secondary pressure relief; and in a case that D1 is lower or higher than the set range, the time interval of the primary and secondary pressure relief is shorter, which reduces the secondary pressure relief effect of the explosion-proof structure.

Specific examples are used herein to illustrate the principles and embodiments of the present disclosure. The description of the above embodiments is merely provided to assist in understanding the technical solution of the present disclosure and the core concepts thereof. It should be understood by those of ordinary skill in the art that modifications may still be made to the technical solutions described in the foregoing embodiments, or equivalents may be made to some of the technical features therein. These modifications or equivalents do not depart the essence of the corresponding technical solutions from the scope of the technical solutions of the embodiments of the present disclosure.

**Claims**

1.  An explosion-proof structure, being applied to a battery and **characterized by** comprising:
    a cover plate (110) provided with an explosion-proof groove (120), wherein the explosion-proof groove (120) includes a first sub-groove (121) and a second sub-groove (122), a projection of the first sub-groove (121) and a projection of the second sub-groove (122) on a side of the cover plate (110) enclose a closed ring, and a thickness of the cover plate (110) at a position where the first sub-groove (121) is located is less than a thickness of the cover plate (110) at a position where the second sub-groove (122) is located.

2.  The explosion-proof structure of claim 1, wherein the cover plate (110) comprises a first side (111) and a second side (112) oppositely disposed, the first sub-groove (121) and the second sub-groove (122) are disposed on the first side (111), and the first sub-groove (121) communicates with the second sub-groove (122); preferably, an arc length of the first sub-groove (121) is less than an arc length of the second sub-groove (122).

3.  The explosion-proof structure of claim 1 or 2, wherein an outer diameter of the explosion-proof groove (120) is E1, and E1 satisfies with $24mm \leq \mu E1 \leq 40mm$.

4.  The explosion-proof structure of any one of claims 1 to 3, wherein a thickness of the cover plate at the first sub-groove is H1, a thickness of the cover plate at the second sub-groove is H2, and H1 and H2 satisfy with $20\mu m \leq H1 \leq 115\mu m$, $25\mu m \leq H2 \leq 135\mu m$.

5.  The explosion-proof structure of any one of claims 1 to 3, wherein a thickness of the cover plate at the first sub-groove is H1, a thickness of the cover plate at the second sub-groove is H2, and H1 and H2 satisfy with $5\mu m \leq H2- H1 \leq 20\mu m$.

6.  The explosion-proof structure of any one of claims 1 to 5, wherein a ratio of an arc length of the first sub-groove (121) to an arc length of the second sub-groove (122) is G, and G satisfies with $1/20 \leq G \leq 1/7$.

7.  The explosion-proof structure of any one of claims 1 to 6, wherein a thickness of an area other than the explosion-proof groove (120) on the cover plate (110) is C, and C satisfies with $0.4mm \leq C \leq 1.0mm$.

8.  The explosion-proof structure of any one of claims 1 to 7, wherein a width of a notch of the explosion-proof groove is a, and a satisfies with $0.6mm \leq a \leq 1.5mm$.

9.  The explosion-proof structure of any one of claims 1 to 8, wherein the explosion-proof groove (120) comprises a plurality of the first sub-grooves (121) and a plurality of the second sub-grooves (122), the first sub-grooves (121) and the second sub-grooves (122) are alternately arranged.

10. The explosion-proof structure of claim 2, wherein the cover plate (110) comprises a first sub-portion (113) and a second sub-portion (114), the first sub-portion (113) and the second sub-portion (114) are adjacent, and the first sub-portion (113) is adjacent to an edge of the cover plate (110); wherein in a direction from the second side (112) to the first side (111), the second sub-portion (114) is at least partially higher than the first sub-portion (113), and the explosion-proof groove (120) is disposed on the second sub-portion (114).

11. The explosion-proof structure of claim 10, wherein the second sub-portion (114) comprises a recess (1141) and a boss (1142) located on a same circumference, a surface of the boss (1142) toward a core (140) is higher than a surface of the recess (1141) toward the core (140) and a surface of the first sub-portion (113) toward the core (140), a surface of the boss (1142) away from the core (140) is higher than a surface of the recess (1141) away from the core (140) and a surface of the first sub-portion (113) away from the core (140), the first sub-groove (121) is at least partially disposed on the recess (1141), and the second sub-groove (122) is disposed on the boss (1142).

12. The explosion-proof structure of claim 11, wherein the cover plate (110) further comprises a third sub-portion (115), the third sub-portion (115) is circular, the third sub-portion (115) is concentrically disposed with the second sub-portion (114), and the recess (1141) and the boss (1142) enclose a closed ring.

13. The explosion-proof structure of claim 12, wherein the cover plate (110) further comprises a fourth sub-portion (116), the fourth sub-portion (116) is annular, the fourth sub-portion (116) is disposed between the second sub-portion (114) and the third sub-portion (115), and the fourth sub-portion (116) is connected the second sub-portion (114) and the third sub-portion (115).

14. The explosion-proof structure of claim 13, wherein a surface of the first sub-portion (113) toward the core (140) is higher than a surface of the fourth sub-portion (116) toward the core (140), and the fourth sub-portion (116) is configured to connect with an electrode of the battery;
or, the surface of the first sub-portion (113) toward the core (140), the surface of the fourth sub-portion (116) toward the core (140) and the surface of the counter (1141) toward the core (140) are at same height.

15. The explosion-proof structure of claim 12, wherein a height of a surface of the third sub-portion (115) toward the core (140) is not lower than a height of a surface of the boss (1142) toward the core (140), and a height of a surface of the third sub-portion (115) away from the core (140) is not lower than a height of a surface of the boss (1142) away from the core (140).

16. The explosion-proof structure of any one of claims 11 to 15, wherein a depth of the recess (1141) is A, and A satisfies with $0.8C \leq A \leq 1.5C$, wherein C is a thickness of an area other than the explosion-proof groove (120) on the cover plate (110).

17. The explosion-proof structure of any one of claims 11 to 16, wherein a width of a top of the recess (1141) is D1, a width of a bottom of the recess (1141) is D2, and D1 and D2 satisfy with $4mm \leq D1 \leq 12mm$; $D2 = D1 - 2C \cdot \tan(\alpha-90°)$, and $D2 > 2mm$;

   wherein $\alpha$ is an included angle between the bottom of the recess (1141) and a side of the recess (1141), and $\alpha$ satisfies with $100° \leq \alpha \leq 170°$;
   wherein C is a thickness of an area other than the explosion-proof groove (120) on the cover plate (110).

18. The explosion-proof structure of any one of claims 11 to 17, wherein an outer diameter of the explosion-proof groove (120) is located is E1, an inner diameter of the second sub-portion (114) is E2, an outer diameter of the second sub-portion (114) is E3, a diameter of the cover plate (110) is E4, and a thickness of an area other than the explosion-proof groove (120) on the cover plate (110) is C, wherein E1, E2, E3, E4 and C satisfy with: $42mm \leq E4 \leq 46mm$; $0.75E4 \leq E3 \leq 0.96E4$, $0.4E4 \leq E2 \leq 0.72E4$ and $3C \leq E3 - E2 \leq 27.8C$; and $E2 + C \leq E1 \leq E3 - C$.

19. The explosion-proof structure of any one of claims 10 to 18, wherein a distance between the first side (111) of the second sub-portion (114) and the first side (111) of the first sub-portion (113) is B, and B satisfies with $0.8C \leq B \leq 1.5C$, wherein C is a thickness of an area other than the explosion-proof groove (120) on the cover plate (110).

20. The explosion-proof structure of claim 1, wherein the cover plate (110) comprises a first side (111) and a second side

(112) oppositely disposed, the first sub-groove (121) and the second sub-groove (122) are disposed on the second side (112), and the first sub-groove (121) communicates with the second sub-groove (122);

or, the first sub-groove (121) is disposed on the first side (111), and the second sub-groove (122) is disposed on the second side (112);
or, the second sub-groove (122) is disposed on the first side (111), and the first sub-groove (121) is disposed on the second side (112).

21. The explosion-proof structure of any one of claims 1 to 20, wherein a thickness H1 of the cover plate (110) at the first sub-groove (121) and a thickness H2 of the cover plate (110) at the second sub-groove (122) are calculated according to the following equations (1) and (2),

$$H1 = (P1*E1)/4Q \ (1);$$

$$H2 = (P2*E1)/4Q \ (2);$$

wherein Q is a tensile strength of material prepared for the cover plate (110); E1 is an outer diameter of the explosion-proof groove (120); P1 is a pressure for relieving a position of the cover plate (110) at the first sub-groove (121); and P2 is a pressure for relieving a position of the cover plate (110) at the second sub-groove (122).

22. A battery, comprising the explosion-proof structure of any one of claims 1 to 21;

a core (140) including a positive electrode and a negative electrode; and
a housing (150), wherein the core (140) is mounted in the housing (150), an end of the housing (150) is provided with an opening (151), and cover plate (110) is sealingly connected to the housing (150) to close the opening (151).

23. The battery of claim 22, further comprising a positive terminal (152), a first current collector (160), a second current collector (170), and an insulator (180); wherein the positive terminal (152) is disposed at an end of the housing (150) away from the cover plate (110), the first current collector (160) is welded to the core (140) and disposed between the cover plate (110) and an end of the core (140), the second current collector (170) is welded to the core (140) and disposed between the core (140) and the positive terminal (152), and the insulator (180) is disposed between the core (140) and the positive terminal (152) and disposed between the second current collector (170) and the housing (150).

24. The battery of claim 22 or 23, wherein an area of an outer circle of the explosion-proof groove (120) on the cover plate (110) is φ1, and a cross-sectional area of the housing (150) is φ2 in a direction perpendicular to an axis of the housing (150), wherein φ1 and φ2 satisfy with 0.27≤φ1/φ2≤0.76.

25. The battery of any one claims 22 to 24, wherein a portion of a side wall of the housing (150) adjacent to the opening (151) is constricted inwardly to form a flange (153), the opening (151) of the housing (150) is provided with a pressing plate (154), the pressing plate (154) and the flange (153) are opposite and spaced, and the cover plate (110) is mounted between the flange (153) and the pressing plate (154).

FIG. 1

FIG. 2

FIG. 3

111    112

121

D

**FIG. 4**

H1

C

**FIG. 5**

H2

111    112

122

1142

a

B

C

**FIG. 6**

FIG. 7

FIG. 8

FIG. 9

**EP 4 579 897 A1**

FIG. 10

FIG. 11

FIG. 12

19

FIG. 13

$120 \begin{cases} 121 \\ 122 \end{cases}$

FIG. 14

FIG. 15

FIG. 16

FIG. 17

FIG. 18

Europäisches
Patentamt

European
Patent Office

Office européen
des brevets

# EUROPEAN SEARCH REPORT

**Application Number**

EP 24 21 8944

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/220881 A1 (CONTEMPORARY AMPEREX TECHNOLOGY CO LTD [CN]) 23 November 2023 (2023-11-23) | 1-9, 20-25 | INV. H01M50/143 H01M50/166 |
| A | * figure 8 * | 10-19 | H01M50/342 H01M50/148 |
| X | US 2023/113132 A1 (XU WEIDONG [CN] ET AL) 13 April 2023 (2023-04-13) | 1-9, 20-25 | H01M50/152 H01M50/528 |
| A | * paragraph [0062] * | 10-19 | H01M50/548 H01M50/536 |
| X | CN 116 557 596 A (SHENZHEN HAICHEN ENERGY STORAGE CONTROL TECH CO LTD ET AL.) 8 August 2023 (2023-08-08) | 1-9,20, 21,23-25 | |
| A | * paragraph [0039] * | 10-19 | |
| A | US 2023/084778 A1 (HE BO [CN] ET AL) 16 March 2023 (2023-03-16) * paragraph [0028] * | 1-25 | |

**TECHNICAL FIELDS SEARCHED (IPC)**

H01M

The present search report has been drawn up for all claims

| Place of search | Date of completion of the search | Examiner |
|---|---|---|
| The Hague | 2 April 2025 | Goeman, Frits |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT**
**ON EUROPEAN PATENT APPLICATION NO.**                    EP 24 21 8944

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2025

| Patent document cited in search report | | Publication date | Patent family member(s) | | Publication date |
|---|---|---|---|---|---|
| WO 2023220881 | A1 | 23-11-2023 | CN | 117413425 A | 16-01-2024 |
| | | | EP | 4468493 A1 | 27-11-2024 |
| | | | US | 2025007079 A1 | 02-01-2025 |
| | | | WO | 2023220881 A1 | 23-11-2023 |
| US 2023113132 | A1 | 13-04-2023 | CN | 216120624 U | 22-03-2022 |
| | | | EP | 4167334 A1 | 19-04-2023 |
| | | | ES | 2983257 T3 | 22-10-2024 |
| | | | FI | 4167334 T3 | 24-06-2024 |
| | | | HU | E067369 T2 | 28-10-2024 |
| | | | LT | 4167334 T | 12-08-2024 |
| | | | PT | 4167334 T | 08-07-2024 |
| | | | US | 2023113132 A1 | 13-04-2023 |
| CN 116557596 | A | 08-08-2023 | NONE | | |
| US 2023084778 | A1 | 16-03-2023 | CN | 215816251 U | 11-02-2022 |
| | | | US | 2023084778 A1 | 16-03-2023 |

EPO FORM P0459

For more details about this annex : see Official Journal of the European Patent Office, No. 12/82